Europäisches Patentamt

European Patent Office

Office européen des brevets

(19)

(11) Publication number: **0 100 855**
**B1**

(12) **EUROPEAN PATENT SPECIFICATION**

(45) Date of publication of patent specification: **21.10.87**      (51) Int. Cl.⁴: **G 05 G 9/02, E 05 B 53/00**

(21) Application number: **83106397.9**

(22) Date of filing: **30.06.83**

(54) Remote control device.

(30) Priority: **07.07.82 JP 119045/82**

(43) Date of publication of application:
**22.02.84 Bulletin 84/08**

(45) Publication of the grant of the patent:
**21.10.87 Bulletin 87/43**

(84) Designated Contracting States:
**DE FR GB**

(56) References cited:
**EP-A-0 032 378**
**DE-A-1 575 679**
**GB-A-1 582 435**
**GB-A-2 039 319**
**US-A-2 480 083**

(73) Proprietor: **NISSAN MOTOR CO., LTD.**
**No.2, Takara-cho, Kanagawa-ku**
**Yokohama-shi Kanagawa-ken 221 (JP)**

(72) Inventor: **Mochida, Haruo**
**1104-41, Susugaya Kiyokawa-mura**
**Akio-gun Kanagawa Prefecture (JP)**

(74) Representative: **Patentanwälte Grünecker, Dr.**
**Kinkeldey, Dr. Stockmair, Dr. Schumann, Jakob,**
**Dr. Bezold, Meister, Hilgers, Dr. Meyer-Plath**
**Maximilianstrasse 58**
**D-8000 München 22 (DE)**

Courier Press, Leamington Spa, England.

## Description

The present invention relates generally to a remote control arrangement comprising a manually operable actuating mechanism having fixed and movable members and a first and second locking device to be actuated by a single Bowden cable, adapted to interconnect the first and second locking devices with the actuating mechanism respectively, wherein said Bowden cable, between said locking devices, forms a bend at least and includes an inner wire and a first flexible outer housing portion receiving said inner wire between the fixed member of the actuating mechanism and a movable member of the first locking device, said Bowden cable moreover includes a second flexible outer housing portion extending between a stationary member of the first locking device and the second locking device, the leading end of the inner wire is attached to the movable member of the actuating mechanism and the trailing end of the inner wire is attached to the second locking device, said inner wire is provided with a stopper abutting against a stationary member of the first locking device when the inner wire is pushed in order to actuate said first locking device.

An arrangement of this type is disclosed in EP—A—00 32 378. Said arrangement comprises a first mechanism having a stationary member and a movable member for actuating said first mechanism; a second mechanism having a stationary member and a movable member for actuating said second mechanism; a wire connected at one end to the movable member of said first mechanism and which is slidably disposed through the stationary member of said second mechanism; an actuating mechanism having a stationary member and a lever, said lever being operatively connected to the other end of said wire for selectively moving said wire in first and second axial directions, the movable member of said first mechanism being moved to operate said first mechanism upon said wire being moved in said first axial direction; a first flexible housing disposed about said wire, said first housing being connected at one end to the stationary member of said actuating mechanism and at the other end to the movable member of said second mechanism; a second flexible housing disposed about said wire, said second housing being connected at one end to the stationary member of said second mechanism and at the other end to the stationary member of said first mechanism, and a stopper fixed on said wire and adapted to abut the stationary member of said second mechanism when said wire is driven in said second axial direction.

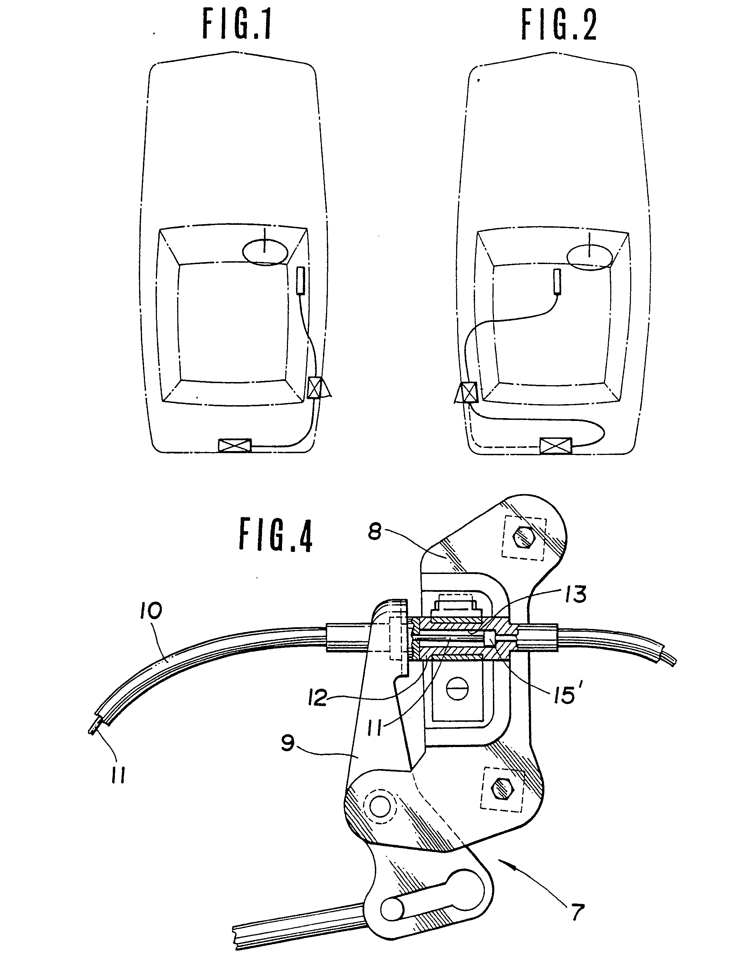

Accordingly, EP—A—00 32 378 teaches to operate one locking mechanism by exploiting the bending capability of the outer flexible housing of the cable when this latter is pushed and the second locking mechanism by pulling the inner wire or strand in a traditional way. However, this arrangement has suffered from the unexpected drawback that when it is desired to arrange the mechanism as shown in Fig. 2, wherein the gasoline fill cover (for example) is located on the opposite side of the vehicle as compared with the arrangement shown in Fig. 1, in order to utilize exactly the same apparatus, it has been necessary to bend or curve the section of the Bowden cable between the two lock mechanisms as shown (in solid line). This curving has induced an undesirable resistance to the movement of the inner wire and further posed a problem in that it is difficult to locate the curved portion of the cable in the restricted environment of the rear end of the vehicle.

Therefore it is an object of the present invention to develop an improved remote control arrangement of the type described which enables the locking devices to be disposed such that sharper bends or curves of the Bowden cable between the locking devices can be tolerated without detriment to the functioning of the arrangement.

To achieve the above-mentioned object, the remote control arrangement incorporates the features according to the characterising portion of claim 1.

Thus, the trailing end of the inner wire is operatively connected with a fixed stationary bracket of the second locking device whereas the associated end of the flexible outer housing of the Bowden cable terminates in a rounded head abutting against a movable lever which is pivotally supported by the stationary bracket of said locking device, the same being actuated by the straightening movement of the flexible outer housing in response to a pulling action applied to the wire whereas the movable member of the first locking device is moved by the first flexible outer housing portion when the inner wire is pushed.

The present invention is based on the discovery that, quite contrary to the previously proposed arrangement wherein an excess of cable is forced into the fixed length of outer housing disposed between the manually operable device and a remotely disposed mechanism so that the outer member tends to buckle and "shrink" back along the inner wire in a manner to operate a lever or the like to which it is attached, it is in fact possible to pull a length of inner wire out of a predetermined length of outer housing whereby the outer member tends to "move along" the inner cable in an attempt to "ingest" the deficit of inner wire and thus move in a manner which can be used to operate a remotely disposed mechanism.

This discovery dispells the incumbering previous preconception that the inner wire would "naturally" have to be used to pull a movable of the nature found in the endmost latch mechanism disclosed in the previously mentioned publication and that the attachment of the inner wire to a stationary member would render the device unworkable.

This therefore renders it possible for both of the flexible outer members of the sections of the "single" Bowden type cable utilized in the previously mentioned prior disclosed arrangement which are located between the mechanisms associated therewith to be used to operate both of the latch mechanisms and allow for exactly the same apparatus as used in the prior disclosed arrangement to be used in an arrangement wherein the outer of cable is connected to a movable member of the endmost mechanism while the inner wire is conencted to a stationary member thereof.

The economy of parts which may be realized through this invention will of course be readily apparent. For example, the invention allows for the same apparatus to be used in both left and right hand drive vehicles and/or different vehicles merely by way of changing the manner of connection between the inner and outer members of the cable.

More specifically, the invention features a remote control arrangement which comprises a manually operable actuating mechanism, a first device operatively interconnected with the actuating mechanism by a first section of Bowden cable having an inner wire and a flexible outer housing disposed thereabout and a second device operatively interconnected with the first device by a second section of Bowden cable having an inner wire and a flexible outer housing, wherein the inner wires of the first and second sections of Bowden cable are defined by a single strand which is connected at one end to the actuating mechanism so as to be movable thereby in first and second directions toward and away from the actuating mechanism respectively, and which is further operatively connected at the other end to a stationary member of the second device, and wherein the flexible outer housing of the second section of Bowden cable is operatively connected with a movable member of the second device for operating the second device upon the single strand being moved in the first axial direction.

Brief Description of the Drawings

The features and advantages of the arrangement of the present invention will become more clearly appreciated from the following description taken in conjunction with the accompanying drawings in which:

Fig. 1 is a schematic plan view showing the disposition of the arrangement disclosed in European Patent Application Publication No. 81100054.6 within a vehicle;

Fig. 2 is a plan view similar to that of Fig. 1, but showing the prior disclosed arrangement disposed in a vehicle wherein the gasoline filler cap (for example) is provided on the right hand side of the vehicle and which shows in (solid line) the curving of the end section of Bowden cable which is inherently required with the prior disclosed arrangement and the meritorious simplification (shown in broken line) which can be achieved via application of the present invention.

Fig. 3 is a view partially in section which shows an embodiment of the present invention; and

Fig. 4 is a front elevation showing the arrangement of the lock mechanism located closest to the manually operable control or actuating mechanism.

Detailed Description of the Preferred Embodiments

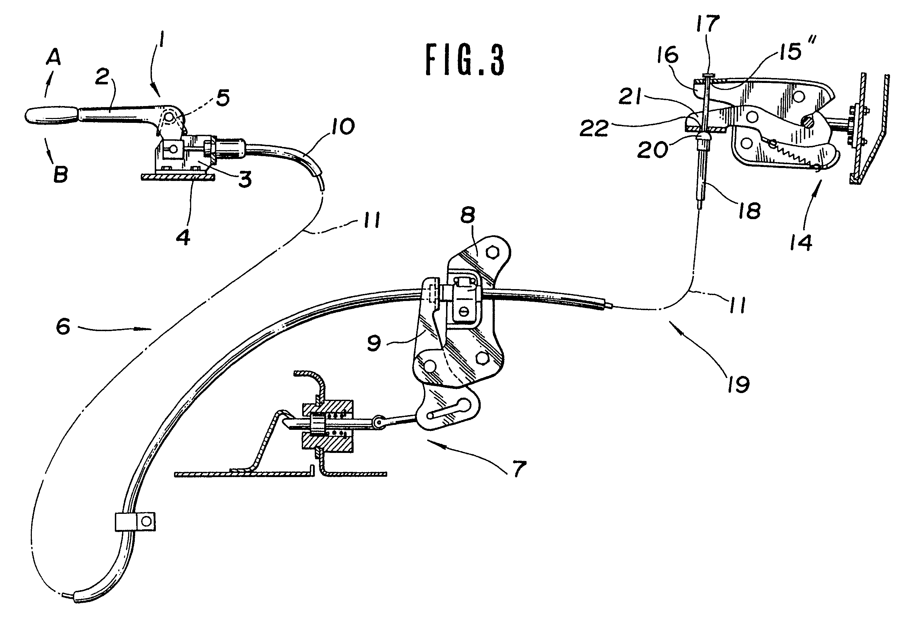

Turning now to Figs. 3 and 4 a preferred embodiment of the present invention is shown. In this arrangement a manually operable actuating mechanism 1 is provided with a lever 2 which is pivotally mounted on a bracket 3 connected to the chassis 4 of a vehicle (for example). This lever 3 is biased to a home or rest position by a spring 5 and is arranged to be pivotal in both directions (viz., A and B) from the rest position. A first section of Bowden cable 6 extends between the actuating mechanism 1 and a lock mechanism 7. This lock mechanism 7 as best seen in Fig. 4, includes a base plate 8 and a lever 9 pivotally mounted thereon. In this arrangement the flexible outer member 10 of the first section of Bowden cable 6 is connected to the lever 9 while the inner wire or strand 11 is arranged to slidably pass through a member 12 in which a stepped bore 13 is formed and continue on to another lock mechanism 14. A bead or stopper 15' is fixed to the wire 11 and arranged to abut the end of the stepped bore 13 upon the wire being moved axially in a direction away from the manually operable actuating mechanism 1 toward the remotest (14) of the two lock mechanisms (7, 14) and slide freely back toward the actuating mechanism 1 when the wire 11 is pulled theretoward. The operation of this arrangement is such that upon the wire 11 being moved away from the actuating mechanism 1 the stopper 15' engages the end of the stepped bore 13 with the result that the outer member 10 tends to have an excess of wire 11 inserted thereinto and accordingly buckle in a manner to move back along the inner wire 11 and pull the lever 9 in the counter clockwise direction. Conversely, upon the inner wire 11 being drawn toward the actuating mechanism 1 the stopper 15' merely slides in the bore 13 and the lever 9 remains in the illustrated position.

The endmost portion of the inner wire 11 is disposed through an aperture 15'' formed in a stationary bracket 16 fixed to the chassis 4, and provided with a bead 17 which limits the movement of the wire 11 in the direction of the actuating mechanism 1 but allows same to move freely through the aperture 15'' in when the wire 11 is moved toward the endmost lock mechanism 14 by the mechanism 1. The flexible outer member 18 of the section of Bowden cable 19 defined between the intermediate lock 7 and the endmost lock 14 is provided in this case with a rounded end portion 20 which abuts against a lever 21 pivotally mounted on the stationary bracket 16. This lever 21 is formed with an aperture 22 through which the inner wire 11 passes.

The operation of this arrangement is such that when the wire 11 is moved toward the endmost lock 14 the wire 11 simply slides through the apertures 15'', 22 and the latch or lock mechanism 14 remains in the illustrated position (viz., locked). However, upon the wire 11 being drawn toward the actuating mechanism 1 the amount of inner wire 11 contained within the flexible outer member 18 tends to decrease and the outer member 18 moves along the inner wire 11 in an attempt to make up the loss. Consequently, the outer member 18 abuts against the lever 21 and rotates same in the clockwise direction to release the latch. It will of course be appreciated that the section of Bowden cable 19 defined between the locks 7, 14 must be slightly curved in order to permit the slight straightening of same which will accompany the movement thereof in the above mentioned lock releasing direction.

## Claims

1. A remote control arrangement comprising a manually operable actuating mechanism (1) having fixed and movable members (3, 2) and a first and second locking device (7, 14) to be actuated by a single Bowden cable (6) adapted to interconnect the first and second locking devices (7, 14) with the actuating mechanism (1) selectively, wherein said Bowden cable (6), between said locking devices (7, 14), forms a bend at least and includes an inner wire (11) and a first flexible outer housing portion (10) receiving said inner wire between the fixed member (3) of the actuating mechanism (1) and a movable member (9) of the first locking device (7), said Bowden cable (6) moreover includes a second flexible outer housing portion (18) extending between a stationary member (8) of the first locking device (7) and the second locking in device (14), the leading end of the inner wire (11) is attached to the movable member (2) of the actuating mechanism (1) and the trailing end of the inner wire (11) is attached to the second locking device (14), said inner wire (11) is provided with a stopper (15') abutting against said stationary member (8) of the first locking device (7) when the inner wire (11) is pushed in order to actuate said first locking device (7) characterised in that the trailing end of the inner wire (11) is operatively connected with a fixed stationary bracket (16) of the second locking device (14) whereas the associated end of the flexible outer housing portion (18) of the Bowden cable (1) terminates in a rounded head (20) abutting against a movable lever (21) which is pivotally supported by the stationary bracket (16) of said second locking device (14), the same being actuated by the straightening movement of flexible outer housing portion (18) in response to a pulling action applied to the inner wire (11).

2. A remote control arrangement as claimed in claim 1, characterised in that the operative connection between said trailing end of the inner wire (11) and the stationary member (16) of the second locking device (14) is such as to permit the movement of the inner wire (11), when it is pushed, and to limit the movement thereof in response to said pulling action.

3. A remote control arrangement as claimed in claim 2, characterised in that said trailing end of the inner wire (11) is slidably received through an aperture (15'') formed in the stationary bracket (16) of the second locking device (14) and terminates in a bead (17) which prevents the inner wire (11) from being pulled through said aperture (15'').

## Patentansprüche

1. Fernsteuerungseinrichtung mit einer manuell betätigbaren Betätigungsvorrichtung (1), die feste und bewegliche Teile (3, 2) aufweist und mit einer ersten und einer zweiten Verriegelungsvorrichtung (7, 14) zur Betätigung durch einen einzigen Bowdenzug (6) zur wahlweisen Verbindung der ersten und zweiten Verriegelungsvorrichtung (7, 14) mit der Betätigungsvorrichtung (1), wobei der Bowdenzug (6) zwischen den Verriegelungsvorrichtungen (7, 14) zumindest eine Biegung aufweist, und ein Innenkabel (11) und einen ersten flexiblen äußeren Mantelabschnitt (10), der das Innenkabel zwischen dem festen Teil (3) der Betätigungsvorrichtung (1) und einem beweglichen Teil (9) der ersten Verriegelungsvorrichtung (7) aufnimmt, umfaßt, und der Bowdenzug (6) außerdem einen zweiten flexiblen äußeren Mantelabschnitt (18) aufweist, der sich zwischen einem stationären Teil (8) der ersten Verriegelungsvorrichtung (7) und der zweiten Verriegelungsvorrichtung (14) erstreckt, wobei das vordere Ende des Innenkabels (11) mit dem beweglichen Teil (2) der Betätigungsvorrichtung (1) verbunden ist und das hintere Ende des Innenkabels (11) mit der zweiten Verriegelungsvorrichtung (14) verbunden ist, und das Innenkabel (11) mit einem Anschlag (15') versehen ist, der sich am stationären Teil (8) der ersten Verriegelungsvorrichtung (7) abstützt, wenn das Innenkabel (11) druckbelastet wird, um die erste Verriegelungsvorrichtung (7) zu betätigen, dadurch gekennzeichnet, daß das hintere Ende des Innenkabels (11) betrieblich mit einer festen stationären Halterung (16) der zweiten Verriegelungsvorrichtung (12) verbunden ist, während das zugehörige Ende des flexiblen äußeren Mantelabschnittes (18) des Bowdenzuges (1) in einem abgerundeten Kopf (20) ausläuft, der gegen einen beweglichen Hebel (21) stößt, der schwenkbar durch die stationäre Halterung (16) der zweiten Verriegelungsvorrichtung (14) gelagert ist und der durch die Streckungsbewegung des flexiblen äußeren Mantelabschnittes (18) in Abhängigkeit von einer auf das Innenkabel (11) wirkenden Zugbetätigung betätigbar ist.

2. Fernsteuerungseinrichtung nach Anspruch 1, dadurch gekennzeichnet, daß die betriebliche Verbindung zwischen dem hinteren Ende des Innenkabels (11) und dem stationären Teil (16) der zweiten Verriegelungsvorrichtung (14) derart erfolgt, daß diese Verbindung die Bewegung des Innenkabels (11) gestattet, wenn es druckbelastet wird und dessen Bewegung bei Übertragung einer Zugbetätigung begrenzt.

3. Fernsteuerungseinrichtung nach Anspruch 2, dadurch gekennzeichnet, daß das hintere Ende des Innenkabels (11) gleitbar durch eine Öffnung (15''), die in der stationären Halterung (16) der zweiten Verriegelungsvorrichtung (14) ausgenommen ist, aufgenommen ist und in einer Verdickung (17) endet, die verhindert, daß das Innenkabel (11) durch die Ausnehmung (15'') hindurchgezogen wird.

**Revendications**

1. Agencement de télécommande comprenant un mécanisme d'actionnement (1) à commande manuelle ayant des organes fixe et mobile (3, 2) et un premier et un second dispositif de blocage (7, 14) à actionner par un seul câble de Bowden (6) adapté à interconnecter les premier et second dispositifs de blocage (7, 14) avec le mécanisme d'actionnement (1) sélectivement, où ledit câble de Bowden (6) entre lesdits dispositifs de blocage (7, 14) forme un coude au moins et comprend un câble interne (11) et une première portion de gaine externe flexible (10) recevant ledit câble interne entre l'organe fixe (3) du mécanisme d'actionnement (1) et un organe mobile (9) du premier dispositif de blocage (7), ledit câble de Bowden (6) comprend par ailleurs une seconde portion de gaine externe flexible (18) s'étendant entre un organe stationnaire (8) du premier dispositif de blocage (7) et le second dispositif de blocage (14), l'extrémité menante du câble interne (11) est attachée à l'organe mobile (2) du mécanisme d'actionnement (1) et l'extrémité arrière du câble interne (11) est attachée au second dispositif de blocage (14), ledit câble interne (11) est pourvu d'une butée (15') butant contre ledit organe stationnaire (8) du premier dispositif de blocage (7) lorsque le câble interne (11) est poussé afin d'actionner ledit premier dispositif de blocage (7), caractérisé en ce que l'extrémité arrière du câble interne (11) est activement connectée à une patte stationnaire fixe (16) du second dispositif de blocage (14) tandis que l'extrémité associée de la portion de gaine externe flexible (18) du câble de Bowden (1) se termine par une tête arrondie (20) en aboutement contre un levier mobile (21) qui est supporté pivotant par la patte stationnaire (16) dudit second dispositif de blocage (14), celui-ci étant actionné par le mouvement de raidissement de la portion de gaine externe flexible (18) en réponse à une action de traction appliquée au cable interne (11).

2. Agencement de télécommande selon la revendication 1, caractérisé en ce que la connexion active entre ladite extrémité arrière du câble interne (11) et l'organe stationnaire (16) du second dispositif de blocage (14) est telle que cela permette le mouvement du câble interne (11), lorsqu'il est poussé, et limite son mouvement en réponse à ladite action de traction.

3. Agencement de télécommande selon la revendication 2, caractérisé en ce que ladite extrémité arrière du câble interne (11) est reçue de manière coulissante à travers une ouverture (15'') formée dans la patte stationnaire (16) du second dispositif de blocage (14) et se termine par une perle (17) qui empêche le câble interne (11) d'être tiré à travers ladite ouverture (15'').

FIG.1  FIG.2

FIG.4

FIG.3